# NEW EUROPEAN PATENT SPECIFICATION

(11) **EP 2 277 020 B2**
(45) Date of publication and mention of the opposition decision: **18.02.2015**
(45) Mention of the grant of the patent: 14.12.2011
(21) Application number: 09745471.4
(22) Date of filing: 18.05.2009
(51) Int. Cl.: G01G 19/387, B07C 5/18, B07C 5/38

(54) **METHOD AND SYSTEM FOR PROCESSING OF ITEMS**
VERFAHREN UND SYSTEM ZUR VERARBEITUNG VON OBJEKTEN
PROCÉDÉ ET SYSTÈME DE TRAITEMENT D'ARTICLES

(30) Priority: 16.05.2008 DK 200800688
(43) Date of publication of application: 26.01.2011
(73) Proprietor: Scanvaegt International A/S, 8200 Arhus N (DK)
(72) Inventor: SKYUM, Henrik, Frank, DK-8660 Skanderborg (DK)
(74) Representative: Olesen, Kaj
(86) International application number: PCT/DK2009/000113
(87) International publication number: WO 2009/138088

(56) References cited:
- WO-A-98/35797
- WO-A-2007/083327
- WO-A-2008/095500
- WO-A1-98/35797
- WO-A1-2004/106020

## Description

### Field of the invention

The invention relates to a method of processing of items, in particular food items such as meat items, vegetables, fruit etc., where the meat items may for example be parts of pigs, calves, sheep, lamb, fish, poultry such as chicken, etc., just as complete items of e.g. fish, poultry or similar food items may be handled. The items are supplied to a processing apparatus, for example a processing apparatus of the robot type comprising at least one robot or a processing apparatus of the separator type comprising at least one separator, which processing apparatus performs a processing of the items in consideration of measured and/or detected data, including the weight of the individual items, said processing comprising e.g. moving, sorting or batching of the items or other processing of the items in consideration of one or more predetermined criteria. The method comprises supplying the items to said processing apparatus via a weighing apparatus and registering the position of the individual items.

Further, the invention relates to a system for such processing of items.

### Background of the invention

Methods and systems of the above-mentioned kind are known for example from WO 01/22043 A, WO 2006/061024 A1 and WO 2007/134603 A1, wherein it is disclosed that robots are used for batching, i.e. bringing items together in batches, and for example from GB 2 116 732 A, EP 781 172 B and WO 00/23771 A, wherein the use of separators in the form of for example diverter wings or the like is described for batching of items.

In connection with such prior art methods and systems, whereby items are supplied for example one by one by means of a conveyor belt or the like, a dedicated device for determining the weight or mass of the supplied items are used, for example in the form of a dynamic weighing apparatus or in the form of apparatus for otherwise determining the mass or weight of the individual items, for example by means of scanning equipment, e.g. X-ray scanning equipment, by means of which the volume of the individual items can be determined, and whereby subsequently the weight or mass of the individual items can be determined with a relatively high degree of accuracy, e.g. when the specific mass of the items is known. In connection with the present invention the weight or mass of the individual items are provided by a dedicated device for measuring the weight or mass of the supplied items, for example in the form of a dynamic weighing apparatus. Furthermore, the position of the individual items, e.g. the position in relation to a conveyor is detected and the information regarding position and weight of each item is related to each other, whereby the processing, e.g. handling, moving, sorting, batching, etc. of the items can be performed, which requires knowledge regarding the position of each item.

Document wo2007/083327 A2 discloses a batching apparatus and method for food items that comprise a weighing device and a video camera. The weight of the food items is estimated using the video camera. Based on this estimation the batching is performed by a robot. The actual weight is confirmed by the weighing device and used to condition the estimation algorithms of the imaging system.

In document WO 98/35797 A1 a portioning apparatus and method is disclosed wherein the mass distribution over an individual food item is estimated using a video camera. The estimated mass distribution is used to cut the food item into pieces of defined weight.

The weight of the pieces is measured by a weighing device and the results used to condition the estimation algorithms of the video system.

For various reasons it may happen that a measurement or a determination of the mass or weight of a single or a few of the supplied items has not been performed by the weighing apparatus or the measured value of the weight may evidently be incorrect, for example if the result is not within a certain interval or if an unambiguous result has not been achieved. This can for example be the case when items have been placed so close to each other on e.g. the conveyor belt that a credible result of the weight measurement has not been achieved. Further, this may be the case if one or more of the supplied items have a length that exceeds normal lengths, leading to that the weight can not be measured with the required accuracy in the time interval, while the item is passing the weighing apparatus, or the item may even be so long that the end of one item has not left the weighing apparatus before the end of the next item enters the weighing apparatus. Furthermore, the feeding or supply speed of the items may be too high to result in a credible result of the weight measurement.

Such items can evidently not be used in the subsequent processing or handling, e.g. the moving, sorting, batching of items based on the weight of the individual items and in consideration of one or more predetermined criteria, and therefore such items must be excluded, for example by leaving the process at the end of a conveyor, or the items can be re-circulated, which creates further problems as regards e.g. the traceability of items. In both cases special measures will be required for the processing of such items and the efficiency, e.g. the yield of the process will be reduced.

Thus, it is an object of the invention to provide an improved method and an improved system for performing such processing of items.

It is further an object of the invention to provide such a method and such a system, by means of which essentially all supplied items can be used for the processing, even when items are supplied lying close to each other, "overlapping" each other in the feeding direction, etc.

These and other objectives are achieved by the invention as it will be explained in further detail in the following.

### Summary of the invention

The invention relates to a method of processing of items that are supplied to a processing apparatus, for example a processing apparatus of the robot type comprising at least one robot or a processing apparatus of the separator type comprising at least one separator, which processing apparatus performs a processing of the items, said processing comprising e.g. moving, sorting or batching of the items or other processing of the items in consideration of one or more predetermined criteria, said method comprising supplying said items to said processing apparatus via a weighing apparatus and registering positions of the items, whereby
- the items are supplied passing a dimension determining apparatus, by means of which data relating to at least one dimension parameter of an item is determined, whereby
- for an item, for which weight data has not been determined or for which determined weight data does not fulfil a predetermined criterion or criteria, estimated weight data is produced by means of data relating to said at least one dimension parameter of said item, and whereby
- said estimated weight data for said item is used as input data for said processing of the items.

Further, the invention also relates to a system as characterized in claim 8 for processing of items, said system comprising a processing apparatus, for example a processing apparatus of the robot type comprising at least one robot or a processing apparatus of the separator type comprising at least one separator, which processing apparatus is configured for performing a processing of supplied items, said processing comprising e.g. moving, sorting or batching of the items or other processing of the items in consideration of one or more predetermined criteria, said system further comprising means for supplying said items to said processing apparatus and a weighing apparatus for determining the weight of the items, wherein the system is configured for facilitating positions of the items being registered, wherein the system further comprises a dimension determining apparatus, the system is adopted for supplying the items passing said dimension determining apparatus, by means of which data relating to at least one dimension parameter of an item is determined, and wherein the system is adapted in such a manner
- that for an item, for which weight data has not been determined or for which determined weight data does not fulfil a predetermined criterion or criteria, estimated weight data is produced by means of data relating to said at least one dimension parameter of said item, and that
- said estimated weight data for said item is used as input data for said processing of the items.

By such a method and/or such a system it is achieved that all supplied items or essentially all supplied items can be used at the processing of the items and that this result is achieved without adding complexity and costly equipment, e.g. since the weight of the relatively few items are estimated in a relatively uncomplicated manner while still providing a result, which in view of the relatively small number of items, for which an estimate is used, is satisfactory as regards the desired overall output of the process as regards e.g. the required or prescribed tolerances for the total weight of the produced batches.

Furthermore, it is achieved that resources and/or measures for handling of items, which have not been weighed or for which a satisfactory result of the weighing has not been provided, are avoided.

Even further, an enhanced efficiency of the processing apparatus, e.g. the batching apparatus, is achieved, including the achievement of an optimal operation speed, i.e. the number of supplied items pro time, since the operation speed need not necessarily be kept below a speed limit where it is known with certainty that all supplied items can be satisfactorily weighed by the weighing apparatus. Correspondingly, the supplied items can be arranged on e.g. a supply conveyor with a larger number of items pro conveyor length, i.e. with less distance between items, without adversely affecting the processing, e.g. the processing quality and/or efficiency. Further, it is noted that the items need not necessarily be placed on e.g. the supply conveyor with great accuracy.

It should be mentioned that an item or the items, for which the weight is estimated, potentially can be handled in a particular manner, depending on the type of processing that is taking place and the actual tolerances, which are acceptable. An item, for which the weight is estimated, can for example in certain circumstances be allowed in a batch of items, in which the number of items will contribute in reducing a weight deviation and/or where larger tolerances are allowed. On the other hand, it may in many circumstances be less desirable to use an item, for which the weight is estimated, for e.g. applications, where single items (or a few) are packed separately, especially if for these packages relatively small tolerances as regards the actual weight are specified or desired.

It is noted that as regards the weighing apparatus that is used, various apparatuses and devices may be used, which applies various measuring principles for performing measurements of the weight of an items with a desired accuracy. As mentioned, a dynamic weighing apparatus may be used, where the items are passing along a conveyor belt, which will be well-known to a skilled person, cf. also the prior art described in the above-mentioned patent documents.

Furthermore, it is noted that the position of the items can be detected, determined, etc. by various devices, arrangements, etc., which applies various principles for detecting the position of items, which are passing for example carried on a conveyor belt and where it will be understood that the position may be the position in the direction of the conveyor as well as the transverse direction of the conveyor, which will be apparent to a skilled person. For example, means such as equipment comprising optical sensors, photocells, camera equipment, vision equipment etc. may be used, which will be apparent to a skilled person.

Even further, it will be understood that the weighing apparatus and the dimension determining apparatus may be placed in various manners, e.g. as regards in relation to the direction, in which the items are fed. For example, the weighing apparatus may be placed as the first in the flow direction, followed by the dimension determining apparatus. However, it will be apparent that these two devices, apparatuses or means may be placed in the opposite relationship, i.e. with the dimension determining apparatus as the first in the flow direction. In this instance it will be necessary for the dimension determining apparatus to perform an estimation of data for all items that are supplied, at least data that are sufficient to allow the actual estimation of weight data to be performed for the items, for which a satisfactory weight measurement has not been performed, which evidently can not be determined before the item has passed the weighing apparatus, and/or possibly for other items, for which estimated data are desired or required, e.g. for comparison purposes in connection with for example a process optimization as it will be explained later on.

Advantageously, as specified in claim 2 and claim 9, respectively, and in a previous step the following may be performed, where
- weight data for at least one item determined by said weighing apparatus and
- estimated weight data produced by means of data relating to said at least one dimension parameter for the same at least one item
   may be correlated in order to initialize a calculation, by means of which said estimated weight data is produced.

Hereby, it is achieved that the method and the system may be configured in a manner, whereby the estimation of the weight data can be provided readily available, since a comparison between data relating to a single or a few items can be used for establishing e.g. initial estimation factors etc., which allows the estimation to be performed in a straightforward manner when it is later detected that satisfactory measured weight data has not been achieved for a specific item. It is apparent that such an initial comparison may be supplemented with knowledge of e.g. prior processing data, standard data for e.g. specific mass, etc.

According to a further advantageous embodiment, as specified in claim 3 and claim 10 respectively, during said processing of the items the following step may be taken, where
- weight data for at least one item determined by said weighing apparatus and
- estimated weight data produced by means of data relating to said at least one dimension parameter for the same at least one item
   may be correlated in order to adjust and optimize a calculation, by means of which said estimated weight data is produced.

Hereby, it is achieved that the method and the system may perform in an adaptive and learning manner, since estimated and measured data relating to one particular item can be compared and used for e.g. adjusting the e.g. estimation factors used for the estimation, and where such a step may be performed regularly, e.g. for example for each 10^{th} item, once every minute, etc. and/or where such a step may be performed at irregular intervals, e.g. randomly. Thus, it is achieved that the estimation will not only be optimized, when the supplied items are of relatively similar characteristics, but also will be adjusted in view of e.g. changing character of the supplied items, which is of particular importance since this may require that e.g. estimation factors, values for specific mass, etc. may suitably be adjusted regularly in order to maintain desired results. Thus, an increased accuracy is achieved and hence also an increased quality and yield of the processing method and system is achieved.

According to a still further advantageous embodiment, as specified in claim 4 and claim 11, respectively, items may be supplied and/or transported using conveyors such as conveyor belts and the positions of the supplied items on or in relation to a conveyor may be detected by said dimension determining apparatus and registered, e.g. for use as input data for said processing apparatus.

Hereby, particular advantages are achieved since the already provided dimension determining apparatus, which can be used for detecting the position of the supplied items may be used for determining the at least one dimension parameter that is necessary as input for the estimation of the weight. Thus, by use of relatively uncomplicated means, the estimation of weight data can be performed in a relatively uncomplicated manner and still provide resulting data, which for the particular purpose will suffice, e.g. as regards accuracy.

According to a further advantageous embodiment, as specified in claim 5 and 12, respectively, said items that are supplied and/or transported using conveyors such as conveyor belts may tracked during the processing of the items and all supplied items may be used for the processing.

Hereby, a particular advantageous embodiment is provided in connection witch processes and systems, where traceability is desired or even necessary, e.g. in order to fulfil customer requirements, standards etc., where the items are tracked or traced through the process in order to be able to e.g. trace an item that has left the processing apparatus and possibly has reached the distribution phase or the customer, back to its origin, to the processing plant, etc. Such tracking of the items may be performed in various manners, e.g. by detecting the position of each item, by registering the sequence of the items, by using detectors placed at various positions along the processing route, etc., as it will be well-known to the skilled person. However, when such tracking is provided for, potential items that can not be used during the processing and therefore must be re-circulated (or used for other purposes, which is undesirable), gives rise to an considerable disadvantage, since the re-circulated items must be introduced in the process again in such a manner that the tracking of each item is maintained in addition to the registration of the new, re-circulated item, e.g. it must be registered precisely where in a given sequence the re-circulated item is introduced, the control system must register the new item, for which the origin information may possibly also have been lost, etc. Thus, recirculation is adverse to the processing efficiency and is highly undesirable. By the above-mentioned embodiment recirculation may be completely avoided since all items or for all practical purposes all items that are supplied, are used during the processing, thereby further enhancing efficiency, when traceability is required.

According to a particular advantageous embodiment, as specified in claim 13, said dimension determining apparatus may comprise vision equipment.

Hereby, particular advantages are achieved since vision equipment may be used for detecting the position of the supplied items and further may be used for determining the at least one dimension parameter that is necessary as input for the estimation of the weight. Thus, by use of relatively uncomplicated means and by use of e.g. standard vision equipment, the estimation of weight data can be performed in a relatively uncomplicated manner and still provide resulting data, which for the particular purpose will suffice, e.g. as regards accuracy.

It will be apparent to a skilled person that the estimation of the weight of an item on the basis of the value of at least one dimension of the item, for example the length of the item, may take place in a wide variety of embodiments. For example, when the length of the item is determined, the weight may be estimated on the basis of knowledge concerning the weight of items having such lengths, for example provided in a table in storage means, in the form of functions, etc. Also, the width of an item as well as the length may be used as input for such an estimation process. Similarly, the area or extent of the item may be determined, e.g. the dimensions in the X-Y-plane, for example corresponding to the surface of the conveyor, which may serve as input for the estimation process. Furthermore, such determined data may be supplemented with one or more values relating to the dimension in e.g. the Z-direction, for example one or more determined heights of the item in relation to the conveyor, which may enhance the accuracy of the estimation of the weight, depending on the irregularity of the shape and form of the particular item. As mentioned, the estimation may be performed on the basis of a dimension, e.g. the length of the item in connection with known values for the weight of such or similar items having a similar dimension, for example based on tables and/or based on a calculation or the like.

According to a still further preferable embodiment, as specified in claim 6 and 14, respectively, said at least one dimension parameter of an item, which is used for producing estimated weight data for said item, may comprise at value corresponding to the volume of the item, said value being produced, e.g. determined, estimated or the like by said dimension determining apparatus, and which value may be used for producing said estimated weight data.

Such an e.g. determined or estimated value corresponding to a volume for the item may be used for calculating the weight using a known or an estimated value for the specific mass of the item or a similar item.

It will be apparent to a skilled person within this particular field that such determinations and estimations may take place in various manners and by using various forms of equipment and methods. Examples of such methods and apparatuses are disclosed in for example WO 00/07452 A1, US 4,557,019 A and US 4,875,254 A. It is apparent that such apparatuses and methods including modifications hereof may find use in connection with the invention as characterized in the appended claims.

According to a further advantageous embodiment, as specified in claim 7 and claim 15, respectively, said processing of the items, e.g. moving, sorting or batching of the items or other processing of the items may be performed under control of a control unit, e.g. a central control unit, which identifies possible items, for which weight data has not been determined by said weighing apparatus or for which weight data determined by said weighing apparatus does not fulfil a predetermined criterion or criteria, and whereby the use of said estimated weight data may be facilitated under control of said control unit for such identified items.

Hereby, various advantages are achieved, including that it is controlled that estimations are performed only for items, for which the weight has not been established by measurement with the desired accuracy, and for items, which are used for initializing the process and/or adjusting/optimizing the process, thus increasing efficiency of the system and the processing and reducing the required process capacity. Furthermore, the control unit serves to allocate the estimated data readily to the particular items for use when determining in which manner a particular item must or can be processed.

As previously mentioned, a number of items may be selected for performing estimations in addition to the weight data provided by the measurement in order to adjust and optimize the process, which items may be selected by the control unit. Further, the control unit will serve as storage for and to manage data relating to the estimation process, e.g. tables, values relating to specific masses, estimation factors, etc. and will handle the updating of such data in order to achieved an ongoing optimization of the process.

It is noted that the control unit may be a central control unit or control unit forming part of a control system, e.g. a distributed control system, etc., which will be apparent to a skilled person. For example, the control unit may be a control unit already allocated to the processing apparatus, e.g. the batching apparatus.

Such a batching apparatus comprising at least one robot, i.e. one handling means of the robot type may for example be of the type described in WO 2006/061024 A1 and in WO 2007/134603 A. However, it is noted that for the purpose of this application a processing apparatus of the robot type should be understood as being a processing apparatus comprising at least one handling device having at least two degrees of freedom, e.g. for moving an item in a two-dimensional plane. In particular, it is mentioned that the processing apparatus may comprise a robotic handling device having at least three degrees of freedom, for example a handling device of a robot type understood as being an automatically controlled robotic manipulator having at least three degrees of freedom. Such a robot may be operating in an effective operation area (i.e. in the X-Y-plane) and the robot may be designed for gripping or picking-up an item and placing it within the effective operation area (i.e. also operating in the Z-direction). Such robots may be configured with a gripping or picking-up element for the lifting of an item and a controllable movement system for the transfer of a gripped or picked item selectively to a selected depositing position, e.g. on a tray and in particular on a selected position on the tray and possibly with a particular orientation, which will be apparent to a skilled person.

### The figures

The invention will be explained in further detail below with reference to the figures of which
- Fig. 1: shows an example of a batching unit, which is used in a system according to an embodiment of the invention,
- Fig. 2: shows a further example of an embodiment of a system according to the invention, wherein robots are used for the handling of the items, and
- Fig. 3: shows a further embodiment of a system according to the invention, wherein an alternative positioning of the weighing apparatus in relation to the dimension determining apparatus is illustrated.

### Detailed description

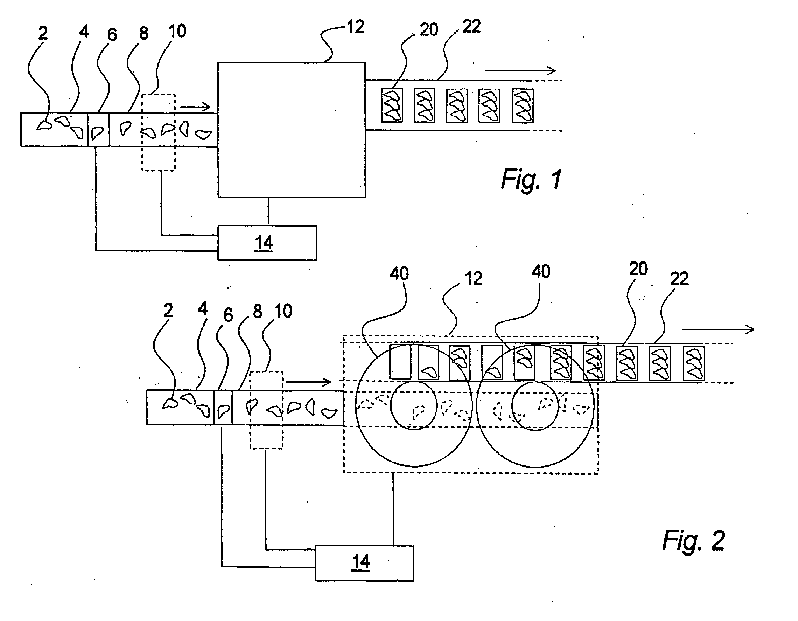

In fig. 1 a system for processing of items according to an embodiment of the invention is shown in schematic form. Thus, a flow of supplied items 2 is shown, which items 2 may in particular be food items such as meat items, vegetables, fruit etc., where the meat items may for example be parts of pigs, calves, sheep, lamb, fish, poultry such as chicken, etc., just as complete items of e.g. fish, poultry or similar food items may be handled. These items 2 are by means of a feeding conveyor 4, e.g. a conveyor belt, transported to a weighing apparatus 6, for example a dynamic weigher, by means of which the individual items 2 are weighed and the results are registered, for example by means of a control unit 14, e.g. a central control unit or a processor unit forming part of a distributed control system. Subsequently, the items 2 are moved further on in the same sequence to a further conveyor 8, e.g. a conveyor belt, which passes a dimension determining apparatus 10, which is shown in sketched form only in fig. 1. The dimension determining apparatus 10, which may comprise for example vision equipment, may be used for detecting the e.g. position of the individual items 2 in relation to the conveyor 8, and the detected positions etc. can be registered by means of e.g. the control unit 14. Further, the data concerning the detected positions, etc. for each individual item is associated with the weight of each item.

Following this, the items 2 are supplied to a processing apparatus 12, which comprises one or more handling means for handling of the items. For example, the processing apparatus may be a processing apparatus of the robot type comprising at least one robot for handling the items or a processing apparatus of the separator type comprising one or more separators, e.g. diverter wings, diverter arms, etc. The processing performed by the processing apparatus can include various types of operations as previously mentioned, for example sorting of items in consideration of weight (mass), redirecting items to predetermined positions, carriers etc. in dependence on weight, batching in batches in dependence on weight and for example in order to form batches having a predetermined total weight, a total weight within predefined tolerances, etc., which operations, handling, batching processes etc. are well-known within this technical field, cf. for example the above-mentioned patent documents. It is well-known to the skilled person that the handling of the items is facilitated by the data that has been measured and/or detected for the incoming flow of items, e.g. the position of each of the items and/or the sequence, in which they are delivered, in connection with e.g. measured data relating to at least the weight of each of the items and possibly other data relating to each item.

As shown in fig. 1 a batching apparatus can be utilized in connection with the invention, i.e. a unit or apparatus, which is configured for bringing a number of items together, i.e. batching the items, under control of a control unit 14, e.g. a central control unit, in such a manner that a predetermined criterion or predetermined criteria are fulfilled for such a batch of items. For example, a predetermined number of items can be brought together, i.e. batched, in a batch. In addition hereto or instead the batch can be formed with a predetermined total weight or the weight must be within certain limits. Further, the items can be brought together in a batch in consideration of other parameters such as for example type, form or shape of the individual items and/or other characteristics, which will also be apparent to a skilled person, cf. e.g. the description of the prior art techniques and applications mentioned in the above-mentioned prior art documents. Further, different batches can be produced by such a batching apparatus, e.g. batches with different total weights, e.g. two different predetermined total weights, which will also be apparent to a skilled person.

In this connection and for the purpose of this application it is mentioned that when a processing apparatus of the robot type is concerned, the processing apparatus will comprise at least one handling device having at least two degrees of freedom, e.g. for moving an item in a two-dimensional plane. In particular, it is mentioned that the processing apparatus may comprise a handling device having at least three degrees of freedom, for example a handling device, by means of which an item can be picked or gripped, lifted and moved to another position or location, where the item is placed, e.g. released. As mentioned above, other types of handling devices can be utilized in connection with the invention, e.g. separators such as diverter wings and similar mechanisms.

As shown in fig. 1 the batched items 2 are leaving the processing apparatus 12 in batches 20 via a transport route, for example a conveyor 22 and are led to further processing means such as for example packaging devices or systems, where furthermore such operations as for example marking, labelling, etc. can be performed before the batches are transported further on, for example for storing, for distributing, etc. Preferably, the system is configured for providing traceability of the items.

For various reasons, as previously mentioned, it may happen that a measurement of a single or a few of the supplied items has not been performed by the weighing apparatus 6 or a result of such a measurement has led to a result, which is not unambiguous or which evidently is wrong. This can for example be the case when items have been placed so close to each other on the conveyor 4 that a credible result of the weight measurement has not been achieved, and/or in cases where the feeding speed of the items has been too high to result in a credible result of the weight measurement. Further, this may be the case if one or more of the supplied items have a length that exceeds normal lengths, leading to that the weight can not be measured with the required accuracy in the time interval, while the item is passing the weighing apparatus, or the item may even be so long that the end of one item has not left the weighing apparatus before the end of the next item enters the weighing apparatus. Such items can evidently not be used for the subsequent processing, e.g. handling of the items, which is performed on the basis of the individual weights of the items, and where it is imperative for a satisfactory yield that these individual weights are true.

According to the invention an estimation of the weight for such items can be produced by means of the dimension determining apparatus 10, which may for example be in the form of a vision equipped apparatus, and where the estimated weight data relating to the weight of the particular item can be used instead of the measured weight, which otherwise should have been provided by the weighing apparatus 6, which estimated weight data is registered by for example the control unit 14 and used by this for deciding, how the particular item can be handled by the processing apparatus 12 of the robot type or the separator type. It is noted that the central control 14 may choose to handle the particular item in a particular manner, depending on the processing that is actually taking place, and in view of the tolerances that are acceptable in the particular applications. For example, an item, for which the weight is estimated, may in certain circumstances be allowed to be part of a batch of items, in which the number of items will contribute in reducing a weight deviation and/or where larger tolerances are allowed. On the other hand, it may in many circumstances be less desirable to use an item, for which the weight is estimated, for e.g. applications, where single items (or a few) are packed separately, especially if for these packages relatively small tolerances as regards the actual weight are specified or desired.

The estimation of the weight by means of the dimension determining apparatus 10 may for example be performed by estimating the lengths of the item, the area or extent of the item, e.g. the dimensions in the X-Y-plane, for example corresponding to the area occupied by the item on the surface of the conveyor, and possibly one or more values relating to the thickness of the item, e.g. the dimension in the Z-direction, for example one or more determined heights of the item in relation to the conveyor for supplementing the estimated or determined values regarding e.g. length and/or width, which may enhance the accuracy of the estimation of the weight, depending on the irregularity of the shape and form of the particular item. The estimated data may be compared with actual data, including data relating to e.g. previously measured and/or estimated items. A further possibility is to estimate a volume of the item on the basis of dimension values for the particular item and with the knowledge of a typical specific mass for the item or items involved to estimate the weight of the particular item. In this connection it is mentioned that an optimization can be performed also as regards the specific mass values, which are used, whereby an increased accuracy can be achieved for the estimation process. Hereby it is achieved with relatively simple means and by means of the dimension determining apparatus 10, which may also be used for detecting and determining the position of the individual items, that the weight of items, for which the weighing apparatus has not provided a (satisfactory) measured result, can be estimated with an adequate accuracy in view of the intended purpose of the processing of the items.

A further example of an embodiment according to the invention is shown in fig. 2, which essentially corresponds to fig. 1 and where the same reference numbers are used for the same or corresponding elements, but where a processing apparatus 12, e.g. a handling or batching apparatus, of the robot type is shown. The processing apparatus 12, which in fig 2 is indicated with dotted lines, is here shown having two schematically illustrated robots 40, which under control of a central control 2 selectively move items 2 from the conveyor 8 to packaging means, trays or the like, in such a manner that batches 20 are formed on a conveyor 22. These batches 20 are transported further on by means of the conveyor 22 corresponding to, what has been explained above in connection with fig. 1.

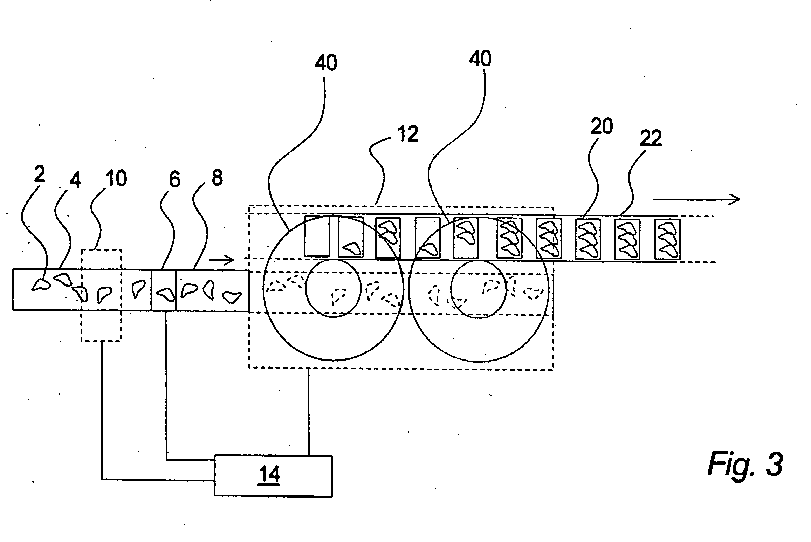

A still further example of an embodiment according to the invention is shown in fig. 3, which essentially corresponds to fig. 2 and where thus the same reference numbers are used for the same or corresponding elements. Here, it is shown that the dimension determining apparatus 10 is placed in advance of the weighing apparatus 6 in the item supply flow. Thus, it is apparent that at least a determination and registration of a dimension has to be performed for each item 2 that passes the dimension determining apparatus 10, and possibly also an estimation of a value. When it is determined by e.g. the control unit 14 that the weight has not been measured for an item by the weighing apparatus 6 or if a measured value is not credible or within certain tolerances, the determined and registered value can be used for estimating weight data for the particular item, which can be used for the processing, e.g. handling of the items.

Also in connection with this embodiment a further number of estimated values - or even all, for example for a limited period - may be used for performing comparisons with the actual data, e.g. the measured weight data in order to relatively quickly achieve a sufficient basis for establishing estimation parameters and factors and in order to optimize or adjust the estimation process, whereby the accuracy relatively quickly can be improved. Also here, an optimization can be performed as regards e.g. the specific mass values that may be used for the estimation process.

It is moreover apparent that the method and the system according to the invention may be designed and adapted in various different manners within the scope of the patent claims. Hence, various forms of conveying means, conveyor belts, measuring, detection and/or vision equipment means may be used and the processing, e.g. handling, batching etc. may be performed in a multitude of different ways, for example as described in the previously mentioned patent documents, which will be apparent to the skilled person.

### List of references

- 2: Items, e.g. foodstuff items
- 4, 8: Conveyor
- 6: Weighing apparatus
- 10: Dimension determining apparatus
- 12: Processing apparatus, e.g. batching apparatus
- 14: Control unit
- 20: Batches
- 22: Conveyor
- 40: Handling means of the robot type

## Claims

1. Method of processing of items (2) that are supplied to a processing apparatus (12), for example a processing apparatus of the robot type comprising at least one robot (40) or a processing apparatus of the separator type comprising at least one separator, which processing apparatus (12) performs a processing of the items, said processing comprising e.g. moving, sorting or batching of the items or other processing of the items in consideration of one or more predetermined criteria, said method comprising supplying said items (2) to said processing apparatus (12) via a weighing apparatus (6) and registering positions of the items (2), the items are supplied passing a dimension determining apparatus (10), by means of which data relating to at least one dimension parameter of an item is determined, **characterized in that**
- for an item, for which weight data has not been determined or for which determined weight data does not fulfil a predetermined criterion or criteria, estimated weight data is produced by means of data relating to said at least one dimension parameter of said item, and
- said estimated weight data for said item is used as input data for said processing of the items.

2. Method according to claim 1, whereby in a previous step
- weight data for at least one item determined by said weighing apparatus (6) and
- estimated weight data produced by means of data relating to said at least one dimension parameter for the same at least one item
are correlated in order to initialize a calculation, by means of which said estimated weight data is produced.

3. Method according to claim 1 or 2, whereby during said processing of the items
- weight data for at least one item determined by said weighing apparatus (6) and
- estimated weight data produced by means of data relating to said at least one dimension parameter for the same at least one item
are correlated in order to adjust and optimize a calculation, by means of which said estimated weight data is produced.

4. Method according to claim 1, 2 or 3, whereby items (2) are supplied and/or transported using conveyors (4, 8) such as conveyor belts and where the positions of the supplied items (2) on or in relation to a conveyor (4, 8) are detected by said dimension determining apparatus (10) and registered, e.g. for use as input data for said processing apparatus (12).

5. Method according to any of claims 1 to 4, whereby said items (2) that are supplied and/or transported using conveyors (4, 8) such as conveyor belts are tracked during the processing of the items and that all supplied items are used for the processing.

6. Method according to any of claims 1 to 5, whereby said at least one dimension parameter of an item, which is used for producing estimated weight data for said item, comprises at value corresponding to the volume of the item, said value being produced, e.g. determined, estimated or the like by said dimension determining apparatus (10), and which value is used for producing said estimated weight data.

7. Method according to any of claims 1 to 6, whereby said processing of the items, e.g. moving, sorting or batching of the items or other processing of the items is performed under control of a control unit (14), e.g. a central control unit, which identifies possible items, for which weight data has not been determined by said weighing apparatus (6) or for which weight data determined by said weighing apparatus (6) does not fulfil a predetermined criterion or criteria, and whereby the use of said estimated weight data is facilitated under control of said control unit (14) for such identified items.

8. System for processing of items (2), said system comprising a processing apparatus (12), for example a processing apparatus of the robot type comprising at least one robot (40) or a processing apparatus of the separator type comprising at least one separator, which processing apparatus (12) is configured for performing a processing of supplied items, said processing comprising e.g. moving, sorting or batching of the items or other processing of the items in consideration of one or more predetermined criteria, said system further comprising means for supplying said items (2) to said processing apparatus (12) and a weighing apparatus (6) for determining the weight of the items, wherein the system is configured for facilitating positions of the items (2) being registered, the system further comprises a dimension determining apparatus (10), the system is adapted for supplying the items passing said dimension determining apparatus (10), by means of which data relating to at least one dimension parameter of an item is determined, **characterized in that** the system is adapted in such a manner
- that for an item, for which weight data has not been determined or for which determined weight data does not fulfil a predetermined criterion or criteria, estimated weight data is produced by means of data relating to said at least one dimension parameter of said item, and that
- said estimated weight data for said item is used as input data for said processing of the items.

9. System according to claim 8, wherein the system is configured in such a manner that in a previous step
- weight data for at least one item determined by said weighing apparatus (6) and
- estimated weight data produced by means of data relating to said at least one dimension parameter for the same at least one item
are correlated in order to initialize a calculation, by means of which said estimated weight data is produced.

10. System according to claim 8 or 9, wherein the system is configured in such a manner during the processing of the items
- weight data for at least one item determined by said weighing apparatus (6) and
- estimated weight data produced by means of data relating to said at least one dimension parameter for the same at least one item
are correlated in order to adjust and optimize a calculation, by means of which said estimated weight data is produced.

11. System according to claim 8, 9 or 10, wherein said system comprises conveyors (4, 8) such as conveyor belts for supplying and/or transporting items (2) and wherein said dimension determining apparatus (10) is configured for detecting the positions of the supplied items (2) on or in relation to a conveyor (4, 8), which positions are registered, e.g. for use as input data for said processing apparatus (12).

12. System according to any of claims 8 to 11, wherein said system is configured for tracking the items (2) that are supplied and/or transported using conveyors (4, 8) such as conveyor belts during the processing of the items and that the system is configured for using all supplied items for the processing.

13. System according to any of claims 8 to 12, wherein said dimension determining apparatus (10) comprises vision equipment.

14. System according to any of claims 8 to 13, wherein the system is configured in such a manner that said at least one dimension parameter of an item, which is used for producing estimated weight data for said item, comprises a value corresponding to the volume of the item, which value is used for producing said estimated weight data.

15. System according to any of claims 8 to 14, wherein the system comprises a control unit (14), e.g. a central control unit, which facilitates said processing of the items, e.g. moving, sorting or batching of the items or other processing of the items under control of the control unit (14), which further identifies possible items, for which weight data has not been determined by said weighing apparatus (6) or for which weight data determined by said weighing apparatus (6) does not fulfil a predetermined criterion or criteria, and wherein the use of said estimated weight data is facilitated under control of said control unit (14) for such identified items.

## Patentansprüche

1. Verfahren zur Verarbeitung von Gegenständen (2), die einer Verarbeitungsvorrichtung (12) zugeführt werden, beispielsweise einer Verarbeitungsvorrichtung vom Robotertyp, die wenigstens einen Roboter (40) umfasst, oder einer Verarbeitungsvorrichtung vom Trennungstyp, die wenigstens eine Trennvorrichtung umfasst, wobei diese Verarbeitungsvorrichtung (12) eine Verarbeitung der Gegenstände ausführt und wobei diese Verarbeitung beispielsweise das Bewegen, Sortieren oder Gruppieren der Gegenstände oder eine andere Verarbeitung der Gegenstände unter Berücksichtigung von einem oder mehreren vorgegebenen Kriterien umfasst, wobei das Verfahren das Zuführen der Gegenstände (2) an die Verarbeitungsvorrichtung (12) über eine Wiegevorrichtung (6) und das Erfassen von Positionen der Gegenstände (2) umfasst, wobei die Gegenstände beim Zuführen an einer Vorrichtung zur Größenbestimmung (10) vorbeilaufen, durch die Daten bestimmt werden, die sich auf wenigstens einen Größenparameter eines Gegenstands beziehen, **dadurch gekennzeichnet, dass**
- für einen Gegenstand, für den keine Gewichtsdaten bestimmt wurden oder für den die bestimmten Gewichtsdaten ein oder mehrere vorgegebene Kriterien nicht erfüllen, geschätzte Gewichtsdaten erzeugt werden, und dies mittels Daten, die sich auf den wenigstens einen Größenparameter des Gegenstands beziehen, und
- die geschätzten Gewichtsdaten für den Gegenstand als Eingabedaten für die Verarbeitung der Gegenstände verwendet werden.

2. Verfahren nach Anspruch 1, wobei in einem vorhergehenden Schritt
- Gewichtsdaten für wenigstens einen Gegenstand, die von der Wiegevorrichtung (6) bestimmt wurden, und
- geschätzte Gewichtsdaten, die mittels Daten erzeugt wurden, die sich auf den wenigstens einen Größenparameter für denselben wenigstens einen Gegenstand beziehen,
korreliert werden, um hierdurch eine Berechnung zu initialisieren, durch die die geschätzten Gewichtsdaten erzeugt werden.

3. Verfahren nach Anspruch 1 oder 2, bei dem während der Verarbeitung der Gegenstände
- Gewichtsdaten für wenigstens einen Gegenstand, die von der Wiegevorrichtung (6) bestimmt wurden, und
- geschätzte Gewichtsdaten, die mittels Daten erzeugt wurden, die sich auf den wenigstens einen Größenparameter für denselben wenigstens einen Gegenstand beziehen,
korreliert werden, um hierdurch eine Berechnung anzupassen und zu optimieren, durch die die geschätzten Gewichtsdaten erzeugt werden.

4. Verfahren nach Anspruch 1, 2 oder 3, bei dem Gegenstände (2) unter Verwendung von Förderern (4, 8), wie etwa Transportbändern, zugeführt und/oder transportiert werden und bei dem die Positionen der zugeführten Gegenstände (2) auf einem oder in Bezug auf einen Förderer (4, 8) durch die Vorrichtung zur Größenbestimmung (10) ermittelt werden und bei dem diese erfasst werden, beispielsweise zur Verwendung als Eingabe für die Verarbeitungsvorrichtung (12).

5. Verfahren nach einem der Ansprüche 1 bis 4, bei dem die Gegenstände (2), die unter Verwendung von Förderern (4, 8), wie etwa Transportbändern, zugeführt und/oder transportiert werden, während der Verarbeitung der Gegenstände verfolgt werden und bei dem alle zugeführten Gegenstände für die Verarbeitung verwendet werden.

6. Verfahren nach einem der Ansprüche 1 bis 5, bei dem der wenigstens eine Größenparameter für einen Gegenstand, der für die Erzeugung von geschätzten Gewichtsdaten für diesen Gegenstand verwendet wird, einen Wert umfasst, der dem Volumen des Gegenstands entspricht, wobei dieser Wert durch die Vorrichtung zur Größenbestimmung (10) erzeugt, beispielsweise bestimmt, geschätzt oder desgleichen wird, und wobei der Wert zum Erzeugen der geschätzten Gewichtsdaten verwendet wird.

7. Verfahren nach einem der Ansprüche 1 bis 6, bei dem die Verarbeitung der Gegenstände, beispielsweise das Bewegen, Sortieren oder Gruppieren der Gegenstände oder eine andere Verarbeitung der Gegenstände, unter der Kontrolle einer Steuerungseinheit (14) ausgeführt wird, beispielsweise einer zentralen Steuerungseinheit, die mögliche Gegenstände identifiziert, für die durch die Wiegevorrichtung (6) keine Gewichtsdaten bestimmt wurden oder für die die von der Wiegevorrichtung (6) bestimmten Gewichtsdaten ein oder mehrere vorgegebene Kriterien nicht erfüllen, und wobei die Verwendung der geschätzten Gewichtsdaten für solche identifizierten Gegenstände unter der Kontrolle der Steuerungseinheit (14) ermöglicht wird.

8. System zur Verarbeitung von Gegenständen (2), wobei das System eine Verarbeitungsvorrichtung (12) umfasst, beispielsweise eine Verarbeitungsvorrichtung vom Robotertyp, die wenigstens einen Roboter (40) umfasst, oder eine Verarbeitungsvorrichtung vom Trennungstyp, die wenigstens eine Trennvorrichtung umfasst, wobei diese Verarbeitungsvorrichtung (12) dafür eingerichtet ist, eine Verarbeitung der zugeführten Gegenstände auszuführen und wobei diese Verarbeitung beispielsweise das Bewegen, Sortieren oder Gruppieren der Gegenstände oder eine andere Verarbeitung der Gegenstände unter Berücksichtigung von einem oder mehreren vorgegebenen Kriterien umfasst, wobei das System außerdem ein Mittel umfasst, um die Gegenstände (2) der Verarbeitungsvorrichtung (12) und einer Wiegevorrichtung (6) zur Bestimmung des Gewichts der Gegenstände zuzuführen, wobei das System dafür eingerichtet ist, es zu ermöglichen, dass Positionen der Gegenstände (2) erfasst werden, und wobei das System außerdem eine Vorrichtung zur Größenbestimmung (10) umfasst, wobei das System dafür eingerichtet ist, dass die Gegenstände beim Zuführen an der Vorrichtung zur Größenbestimmung (10) vorbeilaufen, durch die Daten bestimmt werden, die sich auf wenigstens einen Größenparameter eines Gegenstands beziehen, **dadurch gekennzeichnet, dass** das System auf solche Weise eingerichtet ist, dass
- für einen Gegenstand, für den keine Gewichtsdaten bestimmt wurden oder für den die bestimmten Gewichtsdaten ein oder mehrere vorgegebene Kriterien nicht erfüllen, geschätzte Gewichtsdaten erzeugt werden, und dies mittels Daten, die sich auf den wenigstens einen Größenparameter des Gegenstands beziehen, und
- die geschätzten Gewichtsdaten für den Gegenstand als Eingabedaten für die Verarbeitung der Gegenstände verwendet werden.

9. System nach Anspruch 8, wobei das System auf solche Weise eingerichtet ist, dass in einem vorhergehenden Schritt
- Gewichtsdaten für wenigstens einen Gegenstand, die von der Wiegevorrichtung (6) bestimmt wurden, und
- geschätzte Gewichtsdaten, die mittels Daten erzeugt wurden, die sich auf den wenigstens einen Größenparameter für denselben wenigstens einen Gegenstand beziehen,
korreliert werden, um hierdurch eine Berechnung zu initialisieren, durch die die geschätzten Gewichtsdaten erzeugt werden.

10. System nach Anspruch 8 oder 9, wobei das System auf solche Weise eingerichtet ist, dass während der Verarbeitung der Gegenstände
- Gewichtsdaten für wenigstens einen Gegenstand, die von der Wiegevorrichtung (6) bestimmt wurden, und
- geschätzte Gewichtsdaten, die mittels Daten erzeugt wurden, die sich auf den wenigstens einen Größenparameter für denselben wenigstens einen Gegenstand beziehen,
korreliert werden, um hierdurch eine Berechnung anzupassen und zu optimieren, durch die die geschätzten Gewichtsdaten erzeugt werden.

11. System nach Anspruch 8, 9 oder 10, wobei das System Förderer (4, 8), wie etwa Transportbänder, umfasst, um Gegenstände (2) zuzuführen und/oder zu transportieren, und wobei die Vorrichtung zur Größenbestimmung (10) dafür eingerichtet ist, die Positionen der zugeführten Gegenstände (2) auf einem oder in Bezug auf einen Förderer (4, 8) zu ermitteln, wobei diese Positionen erfasst werden, beispielsweise zur Verwendung als Eingabedaten für die Verarbeitungsvorrichtung (12).

12. System nach einem der Ansprüche 8 bis 11, wobei das System dafür eingerichtet ist, die Gegenstände (2), die unter Verwendung von Förderern (4, 8), wie etwa von Transportbändern, zugeführt und/oder transportiert werden, während der Verarbeitung der Gegenstände zu verfolgen, und wobei das System dafür eingerichtet ist, alle zugeführten Gegenstände für die Verarbeitung zu verwenden.

13. System nach einem der Ansprüche 8 bis 12, wobei die Vorrichtung zur Größenbestimmung (10) eine Bildverarbeitungseinrichtung umfasst.

14. System nach einem der Ansprüche 8 bis 13, wobei das System auf solche Weise eingerichtet ist, dass der wenigstens eine Größenparameter für einen Gegenstand, der für die Erzeugung von geschätzten Gewichtsdaten für diesen Gegenstand verwendet wird, einen Wert umfasst, der dem Volumen des Gegenstands entspricht, wobei dieser Wert zum Erzeugen der geschätzten Gewichtsdaten verwendet wird.

15. System nach einem der Ansprüche 8 bis 14, wobei das System eine Steuerungseinheit (14) umfasst, beispielsweise eine zentralen Steuerungseinheit, die die Verarbeitung der Gegenstände ermöglicht, beispielsweise das Bewegen, Sortieren oder Gruppieren der Gegenstände oder eine andere Verarbeitung der Gegenstände unter der Kontrolle der Steuerungseinheit (14), und die außerdem mögliche Gegenstände identifiziert, für die durch die Wiegevorrichtung (6) keine Gewichtsdaten bestimmt wurden oder für die die von der Wiegevorrichtung (6) bestimmten Gewichtsdaten ein oder mehrere vorgegebene Kriterien nicht erfüllen, und wobei die Verwendung der geschätzten Gewichtsdaten für solche identifizierten Gegenstände unter der Kontrolle der Steuerungseinheit (14) ermöglicht wird.

## Revendications

1. Procédé de traitement d'articles (2) qui sont délivrés à un dispositif de traitement (12), par exemple un dispositif de traitement du type robot comprenant au moins un robot (40) ou un dispositif de traitement du type séparateur comprenant au moins un séparateur, lequel dispositif de traitement (12) effectue un traitement des articles, ledit traitement comprenant par exemple le déplacement, le triage ou le groupage des articles ou autre traitement des articles en considération d'un ou plusieurs critères prédéterminés, ledit procédé comprenant la fourniture desdits articles (2) audit dispositif de traitement (12) via un dispositif de pesage (6) et des positions d'enregistrement des articles (2), les articles sont délivrés en traversant un dispositif de détermination de dimensions (10), au moyen duquel des données concernant au moins un paramètre de dimension d'un article sont déterminées, **caractérisé en ce que**
- pour un article, pour lequel des données de poids n'ont pas été déterminées ou pour lequel des données de poids déterminées ne satisfont pas un critère ou des critères prédéterminés, des données de poids estimées sont produites au moyen de données concernant ledit au moins un paramètre de dimension dudit article, et
- lesdites données de poids estimées pour ledit article sont utilisées comme données d'entrée pour ledit traitement des articles.

2. Procédé selon la revendication 1, moyennant quoi, dans une étape précédente,
- des données de poids pour au moins un article déterminées par ledit dispositif de pesage (6) et
- des données de poids estimées produites au moyen de données concernant ledit au moins un paramètre de dimension pour le même au moins un article sont corrélées de manière à initialiser un calcul, au moyen duquel lesdites données de poids estimées sont produites.

3. Procédé selon la revendication 1 ou 2, moyennant quoi, durant ledit traitement des articles
- des données de poids pour au moins un article déterminées par ledit dispositif de pesage (6) et
- des données de poids estimées produites au moyen de données concernant ledit au moins un paramètre de dimension pour le même au moins un article sont corrélées de manière à ajuster et optimiser un calcul, au moyen duquel lesdites données de poids estimées sont produites.

4. Procédé selon la revendication 1, 2 ou 3, moyennant quoi des articles (2) sont délivrés et/ou transportés en utilisant des convoyeurs (4, 8) tel que des convoyeurs à bande et où les positions des articles délivrés (2) sur ou en relation avec un convoyeur (4, 8) sont détectées par ledit dispositif de détermination de dimensions (10) et enregistrées, par exemple pour l'utilisation comme données d'entrée pour ledit dispositif de traitement (12).

5. Procédé selon l'une quelconque des revendications 1 à 4, moyennant quoi lesdits articles (2) qui sont délivrés et/ou transportés en utilisant des convoyeurs (4, 8) tel que des convoyeurs à bande sont suivis durant le traitement des articles et tous les articles délivrés sont utilisés pour le traitement.

6. Procédé selon l'une quelconque des revendications 1 à 5, moyennant quoi ledit au moins un paramètre de dimension d'un article, qui est utilisé pour produire des données de poids estimées pour ledit article, comprend une valeur correspondant au volume de l'article, ladite valeur étant produite, par exemple déterminée, estimée ou similaire, par ledit dispositif de détermination de dimensions (10), et laquelle valeur est utilisée pour produire lesdites données de poids estimées.

7. Procédé selon l'une quelconque des revendications 1 à 6, moyennant quoi ledit traitement des articles, par exemple le déplacement, le triage ou le groupage des articles ou autre traitement des articles, est effectué sous le contrôle d'une unité de commande (14), par exemple une unité centrale de commande, qui identifie des articles possibles, pour lesquels des données de poids n'ont pas été déterminées par ledit dispositif de pesage (6) ou pour lesquels des données de poids déterminées par ledit dispositif de pesage (6) ne satisfont pas un critère ou des critères prédéterminés, et moyennant quoi l'utilisation desdites données de poids estimées est facilitée sous le contrôle de ladite unité de commande (14) pour de tels articles identifiés.

8. Système de traitement d'articles (2), ledit système comprenant un dispositif de traitement (12), par exemple un dispositif de traitement du type robot comprenant au moins un robot (40) ou un dispositif de traitement du type séparateur comprenant au moins un séparateur, lequel dispositif de traitement (12) est configuré pour effectuer un traitement d'articles délivrés, ledit traitement comprenant par exemple le déplacement, le triage ou le groupage des articles ou autre traitement des articles en considération d'un ou plusieurs critères prédéterminés, ledit système comprenant en outre des moyens pour délivrer lesdits articles (2) audit dispositif de traitement (12) et un dispositif de pesage (6) pour déterminer le poids des articles, dans lequel le système est configuré pour faciliter l'enregistrement de positions des articles (2), le système comprend en outre un dispositif de détermination de dimensions (10), le système est adapté pour délivrer les articles en traversant ledit dispositif de détermination de dimensions (10), au moyen duquel des données concernant au moins un paramètre de dimension d'un article sont déterminées, **caractérisé en ce que** le système est adapté de manière
- que, pour un article pour lequel des données de poids n'ont pas été déterminées ou pour lequel des données de poids déterminées ne satisfont pas un critère ou des critères prédéterminés, des données de poids estimées soient produites au moyen de données concernant ledit au moins un paramètre de dimension dudit article, et que
- lesdites données de poids estimées pour ledit article soient utilisées comme données d'entrée pour ledit traitement des articles.

9. Système selon la revendication 8, dans lequel le système est configuré de manière que, dans une étape précédente,
- des données de poids pour au moins un article déterminées par ledit dispositif de pesage (6) et
- des données de poids estimées produites au moyen de données concernant ledit au moins un paramètre de dimension pour le même au moins un article sont corrélées de manière à initialiser un calcul, au moyen duquel lesdites données de poids estimées sont produites.

10. Système selon la revendication 8 ou 9, dans lequel le système est configuré de manière que, durant le traitement des articles,
- des données de poids pour au moins un article déterminées par ledit dispositif de pesage (6) et
- des données de poids estimées produites au moyen de données concernant ledit au moins un paramètre de dimension pour le même au moins un article sont corrélées de manière à ajuster et optimiser un calcul, au moyen duquel lesdites données de poids estimées sont produites.

11. Système selon la revendication 8, 9 ou 10, dans lequel ledit système comprend des convoyeurs (4, 8) tel que des convoyeurs à bande pour délivrer et/ou transporter des articles (2) et dans lequel ledit dispositif de détermination de dimensions (10) est configuré pour détecter les positions des articles délivrés (2) sur ou en relation avec un convoyeur (4, 8), lesquelles positions sont enregistrées, par exemple pour l'utilisation comme données d'entrée pour ledit dispositif de traitement (12).

12. Système selon l'une quelconque des revendications 8 à 11, dans lequel ledit système est configuré pour suivre les articles (2) qui sont délivrés et/ou transportés en utilisant des convoyeurs (4, 8) tel que des convoyeurs à bande durant le traitement des articles et le système est configuré pour utiliser tous les articles délivrés pour le traitement.

13. Système selon l'une quelconque des revendications 8 à 12, dans lequel ledit dispositif de détermination de dimensions (10) comprend un équipement de vision.

14. Système selon l'une quelconque des revendications 8 à 13, dans lequel le système est configuré de manière que ledit au moins un paramètre de dimension d'un article, qui est utilisé pour produire des données de poids estimées pour ledit article, comprenne une valeur correspondant au volume de l'article, laquelle valeur est utilisée pour produire lesdites données de poids estimées.

15. Système selon l'une quelconque des revendications 8 à 14, dans lequel le système comprend une unité de commande (14), par exemple une unité centrale de commande, qui facilite ledit traitement des articles, par exemple le déplacement, le triage ou le groupage des articles ou autre traitement des articles sous le contrôle de l'unité de commande (14), qui identifie en outre des articles possibles, pour lesquels des données de poids n'ont pas été déterminées par ledit dispositif de pesage (6) ou pour lesquels des données de poids déterminées par ledit dispositif de pesage (6) ne satisfont pas un critère ou des critères prédéterminés, et dans lequel l'utilisation desdites données de poids estimées est facilitée sous le contrôle de ladite unité de commande (14) pour de tels articles identifiés.
